# EUROPÄISCHE PATENTSCHRIFT

(11) **EP 1 002 170 B1**
(45) Veröffentlichungstag und Bekanntmachung des Hinweises auf die Patenterteilung: **26.05.2004**
(21) Anmeldenummer: 98949889.4
(22) Anmeldetag: 14.08.1998
(51) Int. Cl.: E04F 15/10

(54) **BELAGELEMENT FÜR GEBÄUDEOBERFLÄCHEN ODER DERGLEICHEN SOWIE VERFAHREN SEINER HERSTELLUNG**
COVERING ELEMENT FOR BUILDING SURFACES OR THE LIKE AND METHOD FOR THE PRODUCTION THEREOF
ELEMENT DE REVETEMENT POUR SURFACES DE BATIMENTS OU SIMILAIRES ET PROCEDE PERMETTANT DE LE PRODUIRE

(30) Priorität: 14.08.1997 DE 19735189
(43) Veröffentlichungstag der Anmeldung: 24.05.2000
(73) Patentinhaber: Akzenta Paneele + Profile GmbH, 56759 Kaisersesch (DE)
(72) Erfinder: EISERMANN, Ralf, D-56812 Cochem (DE)
(74) Vertreter: Lippert, Stachow, Schmidt & Partner
(86) Internationale Anmeldenummer: PCT/DE1998/002357
(87) Internationale Veröffentlichungsnummer: WO 1999/009274

(56) Entgegenhaltungen:
- DE-A- 2 529 676
- US-A- 2 816 851
- US-A- 3 716 440
- US-A- 4 006 048
- US-E- R E30 233

## Beschreibung

Die Erfindung betrifft ein Verfahren zur Herstellung von widerstandsfähigen Belagelementen für Gebäudeoberflächen oder dergleichen, insbesondere zur Herstellung von dekorativen Belagelementen für Fußböden, unter Verwendung mehrerer Schichten, die durch die Einwirkung von Druck und Wärme in Sandwichbauweise miteinander verbunden werden, mit einer auf der dekorativen Seite vorgesehenen oberen transparenten Decklage, die auch als Overlay-Papier bezeichnet wird, einer Dekorschicht, einer Tragplatte und einer unteren Decklage, wobei die obere Decklage aus einer Trägerschicht vorgefertigt wird, in die ein abriebfestes Material eingebettet und die mit einem Bindemittel versehen wird, sowie ein nach diesem Verfahren hergestelltes Belagelement aus einer Tragplatte, einer auf der Sichtseite vorgesehenen transparenten Decklage, einer Dekorschicht sowie einer unteren Decklage mit einer Zugschicht, die an der der Gebäudeoberfläche zugekehrten Unterseite der Tragplatte vorgesehen ist.

Für die bisher bekannten Belagelemente der genannten Gattung werden vier verschiedenene Lagen vorgefertigt und diese dann unter der Einwirkung von Druck und Wärme in Sandwichbauweise miteinander verbunden.

Die Trägerschicht der oberen Decklage bekannter Belagelemente weist im wesentlichen Zellulose auf. Das abriebfeste Material ist in Form von Korundpartikeln in die Zelluloseschicht eingebettet.

Die Dekorschicht wird nach dem bekannten Verfahren auf einer speziellen Lage aufgebracht, die einzig zur Anbringung des Dekors vorgefertigt werden muß. Diese Lage wird aus wenigstens drei Schichten zusammengesetzt. Die erste Schicht ist eine spezielle weiße Dekorträgerschicht aus Papier oder dergleichen. Auf diese wird die vorzugsweise aus Farbe bestehende Dekorschicht beispielsweise mit einem Druckverfahren aufgedruckt. Die miteinander verbundenen Schichten, Dekorträgerschicht und Dekorschicht, werden nachfolgend wenigstens an ihrer gemeinsamen Oberseite, vorzugsweise an ihrer Oberseite und ihrer Unterseite, mit einem Bindemittel versehen. Als Bindemittel wird zum Beispiel Melaminharz oder ein melaminharzhaltiges Mittel verwendet.

Die Lage mit der Dekorschicht wurde bisher also vorzugsweise in nachstehender Reihenfolge aus vier Schichten zusammengesetzt, einer oberen Bindemittelschicht, der Dekorschicht, der Dekorträgerschicht sowie einer unteren Bindemittelschicht.

Die Hersteller von Belagelementen fertigen die Tragplatte überwiegend selbst und kaufen das Overlay-Papier, die spezielle Lage mit der Dekorschicht sowie die untere Decklage bei zulieferern ein. Diese stellen die Dekorschicht in den gewünschten Designs her.

Ein Belagelement kann so lange benutzt werden, bis die obere transparente Decklage abgerieben ist und durch weitere Benutzung die Dekorschicht zerstört wird. Nachteiligerweise trägt bei dem bekannten Belagelement nur die über der Dekorschicht liegende obere Bindemittelschicht zur Erhöhung der Abriebfestigkeit des Belagelements bei. Die Dekorträgerschicht selbst leistet hierzu keinen Beitrag.

Die auf der Sichtseite der Tragplatte angeordnete Dekorträgerschicht sowie die Trägerschicht der oberen transparenten Decklage bauen während der Fertigung unter Druck und Temperatur gleichgerichtete Eigenspannungen auf. Diese bewirken eine Durchbiegung des Belagelements vornehmlich in seiner Längsrichtung, wobei sich die Biegelinie senkrecht aus der Ebene herausbewegt, in der sich das Belagelement erstreckt. Zum Ausgleich der Durchbiegung wird an der Unterseite der Tragplatte die untere Decklage angebracht. Diese ist mit einer Zugschicht versehen. Die Zugschicht baut ebenfalls Eigenspannungen auf und wirkt der Durchbiegung entgegen. Die Zugschicht muß Eigenspannungen in demselben Maß aufbauen, wie die auf der Sichtseite der Tragplatte angeordneten Schichten, damit eine Kompensation der Eigenspannungen erreicht wird und keine Durchbiegung der Tragplatte beziehungsweise des Belagelements auftritt.

Die Zugschicht muß in demselben Maße Eigenspannungen aufbauen können wie die auf der Sichtseite der Tragplatte angeordnete Dekorträgerschicht und die Trägerschicht zusammen. Unter der Vorraussetzung, daß die Dekorträgerschicht, die Trägerschicht und die Zugschicht etwa die gleiche Materialqualität besitzen, muß die Zugschicht genauso dick sein wie die Summe der Dicken der Dekorträgerschicht und der Trägerschicht. Es wird daher für die Zugschicht viel Material benötigt und das Gewicht erhöht. Dies geht mit einer Verteuerung der Herstell-, Lager- und Transportkosten des Belagelements einher.

Der Erfindung liegt die Aufgabe zugrunde, ein Belagelement sowie ein Verfahren zu seiner Herstellung zu schaffen, mit dem dünne, leichte Belagelemente einfach hergestellt werden können, wobei die Kosten für das Material, die Herstellung, die Lagerung und den Transport gesenkt werden.

Erfindungsgemäß wird die Aufgabe dadurch gelöst, daß die Dekorschicht auf die Tragplatte oder in dem Bereich der Unterseite der Decklage aufgebracht wird und mit der Tragplatte oder der Decklage zu einer vorgefertigten Schicht verarbeitet wird. Bei dem mit diesem Verfahren hergestellten Belagelement ist zwischen der Trägerschicht der oberen Decklage und der Tragplatte einzig die Dekorschicht und eine Bindemittelschicht angeordnet. Die Schichtdicke der Zugschicht der unteren Decklage entspricht im wesentlichen der Schichtdicke der Trägerschicht.

Durch diese einfache Maßnahme reduziert sich die Zahl der vorzufertigenden Lagen auf maximal drei. Eine spezielle Lage für die Dekorschicht entfällt. Diese wird vielmehr mit der oberen transparenten Decklage zu einer Lage zusammengefaßt. Alternativ kann sie auch mit der Tragplatte zu einer Lage zusammengefaßt werden. Die Dekorschicht wird in dem letzteren Fall auf die der oberen Decklage zugewandte Oberseite der Tragplatte aufgebracht.

Durch die Reduzierung der vorzufertigenden Lagen werden weniger Herstellschritte benötigt und die Herstellkosten gesenkt.

Die Gesamtdicke des Belagelements kann geringer ausgeführt werden, und das Belagelement kann leichter werden als bisher. Die Material-, die Lager- und Transportkosten verringern sich auf diese Weise.

Auf der Sichtseite des Belagelements ist die Tragplatte nur noch mit einer Schicht belegt, die eine Eigenspannung bewirkt, nämlich der Trägerschicht der oberen Decklage. Vorteilhaft kann dadurch die Zugschicht der unteren Decklage dünner ausgebildet werden als bisher, nämlich im wesentlichen genauso dick, wie die Dicke der Trägerschicht der oberen Decklage.

Wenn die Gesamtdicke des bekannten Belagelements beibehalten werden kann, so bietet das nach dem neuen Verfahren hergestellte Belagelement einen weiteren Vorzug. Die Trägerschicht der oberen Decklage kann dann nämlich mit einer solchen Dicke ausgeführt werden, wie bisher die Trägerschicht und die Dekorträgerschicht gemeinsam aufwiesen. Vorteilhaft ergibt sich dadurch eine doppelt so dicke Schicht mit abriebfestem Material, die bei einem gleichen Benutzungsgrad doppelt so lange haltbar ist, wie die des bekannten Belagelements. Die Dicke der Zugschicht der unteren Decklage entspricht dabei der Dicke der verdoppelten Trägerschicht.

Außer Gebäudeoberflächen können selbstverständlich auch andere Oberflächen, zum Beispiel Oberflächen von Möbeln, vorteilhaft nach diesem Verfahren hergestellt werden. Es eignet sich unter anderem besonders gut für Küchenarbeitsplatten, die eine besonders widerstandsfähige Oberfläche benötigen.

Zweckmäßig wird die Dekorschicht durch eine Beschichtung mit Farbe hergestellt. Besonders günstig ist es, wenn die Dekorschicht an der Unterseite der Trägerschicht der Decklage aufgebracht wird. Alternativ kann an der Unterseite der Trägerschicht der Decklage zuerst eine Bindemittelschicht und darauf die Dekorschicht aufgebracht werden. Die derart vorgefertigte Decklage kann dann von Herstellern für Overlay-Papiere vorgefertigt und von den Herstellern der Belagelemente bezogen und weiterverarbeitet werden.

Aus verfahrenstechnischen Gründen kann es vorteilhaft sein, die Dekorschicht an der Oberseite der Tragplatte aufzubringen. Sie kommt dort erst zu einem späteren Zeitpunkt mit dem Bindemittel in Kontakt.

Die Farbe der Dekorschicht wird bevorzugt nach dem bekannten Druckverfahren aufgebracht.

Nachstehend ist die vorliegende Erfindung beispielhaft erläutert und anhand der Zeichnung beschrieben. Es zeigen:
- Fig. 1: (Stand der Technik), zeigt die vorgefertigten Lagen eines Belagelements, das nach dem bekannten Verfahren hergestellt wird,
- Fig. 2: die vorgefertigten Lagen eines nach dem neuen Verfahren hergestellten Belagelements mit geringer Gesamtdicke,
- Fig. 3: ein bekanntes Belagelement,
- Fig. 4: ein nach dem neuen Verfahren hergestellten Belagelement mit geringer Gesamtdicke,
- Fig. 5: ein nach dem neuen Verfahren hergestelltes Belagelement mit vedoppelter Dicke der Trägerschicht,
- Fig. 6: die vorgefertigten Lagen einer Ausführungsform eines nach dem neuen Verfahren hergestellten Belagelements,
- Fig. 7: die vorgefertigten Lagen einer weiteren Ausführungsform eines nach dem neuen Verfahren hergestellten Belagelements.

Alle Figuren sind schematische Darstellungen einzelner Schichten im Querschnitt. Die Schichten sind mit unterschiedlichen Schraffurmustern gezeichnet.

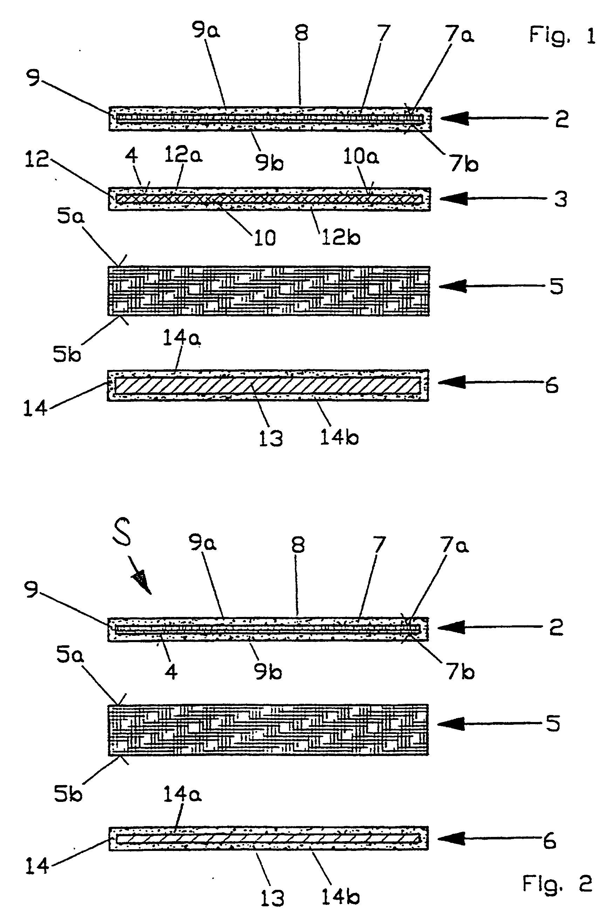

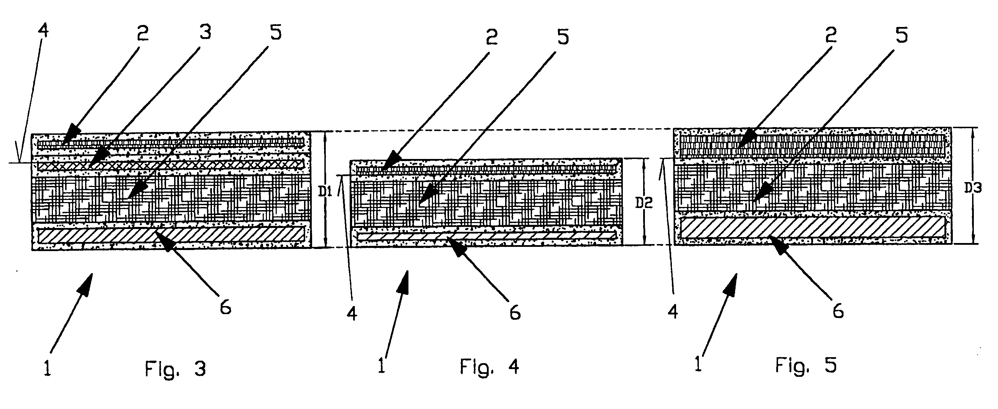

In der Fig. 1 sind die vier Lagen dargestellt, aus denen ein mit dem bekannten Verfahren hergestelltes Belagelement 1 zusammengesetzt wird. Dies sind eine obere transparente Decklage 2, eine spezielle Lage 3 mit einer Dekorschicht 4, eine Tragplatte 5 sowie eine untere Decklage 6. Die Dekorschicht 4 ist in allen Figuren wegen ihrer geringen Dicke nur durch das Bezugszeichen 4 angedeutet, nicht aber wie die übrigen Schichten mit einem besonderen Schraffurmuster eingezeichnet. In der Fig. 1 sind die vier Lagen in der obigen Reihenfolge untereinander abgebildet. Die Lagen werden in dieser Reihenfolge in einer Presse unter Wärmeeinwirkung miteinander verpreßt. Das aus diesen Lagen fertig zusammengefügte Bauelement 1 ist in der Fig. 3 gezeigt.

Gemäß Fig. 1 weist die vorgefertigte obere Decklage 2 eine Trägerschicht 7 auf, die im wesentlichen aus Zellulose besteht, und die, nachdem sie durch die Einwirkung von Druck und Wärme mit den übrigen Lagen verbunden ist, transparent wird. In die Zellulose ist ein abriebfestes Material 8 in Form von Korundpartikeln eingebettet. Die Trägerschicht 7 mit dem abriebfesten Material 8 ist rundherum mit einem Bindemittel 9 umgeben. Das Bindemittel 9 besteht in der vorliegenden Ausführungsform aus Melaminharz und bildet die beiden Melaminharzschichten 9a und 9b, wobei die freie Oberfläche 9a der Melaminharzschicht die begehbare Oberfläche des Belagelements 1 für einen Fußboden bildet. Diese Oberfläche wird durch Abrieb nach und nach abgetragen.

Die spezielle Lage 3 ist mittels einer speziellen Dekorträgerschicht 10 hergestellt, die aus einem weißen Papier besteht. Auf die Oberseite 10a der Dekorträgerschicht 10 ist die aus Farbe bestehende Dekorschicht 4 mit einem Farbdruckverfahren aufgebracht worden. Nach diesem Verfahrensschritt wurde die Lage 3 rundherum mit einem Bindemittel 12 versehen. Als Bindemittel 12 ist ebenfalls Melaminharz verwendet worden, das die beiden Melaminharzschichten 12a und 12b bildet.

Die Tragplatte 5 ist vorliegend aus einer HDF-Platte (High Density Fiberboard) gebildet. Alternativ kann sie aus einer MDF-Platte (Medium Density Fiberboard), einer Spanplatte, Tischlerplatte, Sperrholzplatte oder sonstigem gebildet sein.

Die untere Decklage 6 ist im wesentlichen aus einer Zugschicht 13 aus Papier hergestellt. Diese ist ebenfalls rundherum mit einem Bindemittel 14 umgeben. Das Bindemittel 14 besteht vorliegend auch aus Melaminharz und bildet die Melaminharzschichten 14a und 14b. In der Fig. 1 entspricht die Dicke der Zugschicht 13 der Summe der Dicken der Trägerschicht 7 und der Dekorträgerschicht 10, damit sich das Belagelement nicht durch Eigenspannungen in den Schichten 7, 10 und 13 durchbiegt.

Die Dekorträgerschicht 10 leistet nachteiligerweise keinen Beitrag zur Erhöhung der Abriebfestigkeit des Belagelements 1, da sie sich unter der Dekorschicht 4 befindet.

Die Zugschicht 13 ist dicker ausgeführt als die Trägerschicht 7. Das Aufmaß in der Dicke entspricht der Dicke der Dekorträgerschicht 10. Die Dekorträgerschicht 10 erhöht die Gesamtdicke des Belagelements 1. Die wegen der Dekorträgerschicht 10 relativ dick ausgeführte Zugschicht 13 erhöht die Gesamtdicke des Belagelements 1 weiter. Für das bekannte Belagelement wird daher viel Material benötigt und dessen Gewicht erhöht.

In der Fig. 2 sind die vorgefertigten Lagen eines nach dem neuen Verfahren hergestellten Belagelements 1 gezeigt. Das aus diesen Lagen zusammengefügte Belagelement 1 ist in der Fig. 4 gezeigt. Die Dicke der oberen Decklage 2 und insbesondere der darin angeordneten Trägerschicht 7 entspricht den in der Fig. 1 für die obere Decklage 2 beziehungsweise die Trägerschicht 7 dargestellten Dicken. Die Gesamtdicke D2 des fertig zusammengefügten Belagelements 1 ist jedoch, wie in der Fig. 4 zu sehen, deutlich geringer als bei dem nach dem bekannten Verfahren hergestellten Belagelement 1 nach Fig. 3. Dies resultiert aus der fehlenden speziellen Lage 3 und aus der gegenüber der Ausführung nach Fig. 3 halb so dick ausgebildeten Zugschicht 13.

Die vorgefertigte obere Decklage 2 gemäß der Fig.2 weist hierbei ebenfalls eine Trägerschicht 7 auf, die im wesentlichen aus Zellulose besteht, und in die ein abriebfestes Material 8 in Form von Korundpartikeln eingebettet ist. Auf die spezielle Lage 3 mit der speziellen Dekorträgerschicht 10 wird verzichtet. Die Dekorschicht 4 ist in der vorliegenden Ausführungsform mit einem Farbdruckverfahren auf die Unterseite 7b der Trägerschicht 7 aufgebracht worden. Die unter der Trägerschicht 7 liegende Dekorschicht 4 ist sichtbar, nachdem alle Lagen unter Wärmeeinwirkung miteinander verpreßt sind. Sie wird durch diesen Vorgang transparent.

Die Trägerschicht 7 mit der aufgedruckten Dekorschicht 4 wurde nach dem Bedrucken rundherum mit einem Bindemittel 9 aus Melaminharz umgeben, das die beiden Melaminharzschichten 9a und 9b bildet. Die Dicke der Zugschicht 13 der unteren Decklage 6 ist günstigerweise nur noch so groß, wie die Dikke der Trägerschicht 7 der oberen Decklage 2.

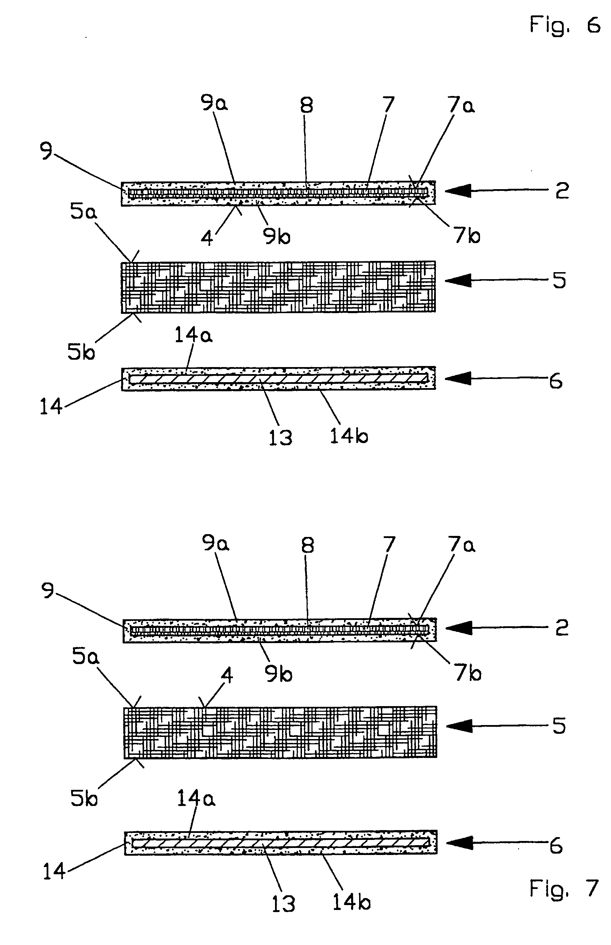

In der Fig. 3 ist ein fertiges Belagelement nach dem Stand der Technik dargestellt. Es weist eine relativ hohe Gesamtdicke D1 auf. Anhand der folgenden Figuren 4 und 5 werden die Vorteile des nach dem neuen Verfahren hergestellten Belagelements verdeutlicht.

Die Ausführungsform des Belagelements nach Fig. 4 zeigt ein nach dem neuen Verfahren hergestelltes Belagelement, das eine geringere Gesamtdicke D2 aufweist, als das bekannte Belagelement gemäß der Fig. 3, da auf die spezielle Dekorträgerschicht 10 verzichtet wurde. Es ist leichter und mit geringerem Materialaufwand hergestellt.

Eine alternative Ausführungsform ist in der Fig. 5 dargestellt. Hierbei entspricht die Gesamtdicke D3 der Gesamtdicke D1 aus Fig. 3. Bei gleicher Dicke der Tragplatte 5 sowie gleicher Gesamtdicke (D1=D3) der beiden Belagelemente ist die in der Fig. 5 dargestellte Trägerschicht 7 mehr als doppelt so dick, wie die Trägerschicht 7 des bekannten Belagelements der Fig. 3. Der Vorteil der Ausführungsform nach Fig. 5 besteht darin, daß über der Dekorschicht 4 mehr als doppelt so viel abriebfestes Material 8 vorhanden ist, und daß das Belagelement 1 wegen der mehr als doppelt so dicken Trägeschicht 7 etwa doppelt so lange haltbar ist, wie das Belagelement gemäß der Fig. 3.

In der Fig. 6 ist eine Ausführungsform des erfindungsgemäßen Belagelements gezeigt, bei der die Dekorschicht 4 nicht direkt auf die Unterseite der Trägerschicht 7 der oberen Decklage 2 aufgebracht ist. In diesem Ausführungsbeispiel ist auf der Trägerschicht 7 zunächst das Bindemittel 9 aus Melaminharz aufgebracht, das die Melaminharzschichten 9a und 9b bildet. Die Dekorschicht 4 ist auf der unteren Melaminharzschicht 9b aufgedruckt worden.

Eine weitere Ausführungsform des erfindungsgemäßen Belagelements ist in der Fig. 7 abgebildet. Die Dekorschicht 4 ist bei diesem Verfahren auf die Oberseite 5a der Tragplatte 5 aufgedruckt worden.

Die Gesamtdicken der Belagelemente nach den dargestellten Ausführungsformen Fig. 6 und Fig. 7 sind deutlich geringer als die Gesamtdicke des bekannten Belagelements gemäß der Fig. 3.

### Bezugszeichenliste

- 1: Belagelement
- 2: obere transparente Decklage
- 3: spezielle Lage
- 4: Dekorschicht
- 5: Tragplatte
- 5a: Oberseite (Tragplatte)
- 5b: Unterseite (Tragplatte)
- 6: untere Decklage
- 7: Trägerschicht
- 7a: Oberseite (Trägerschicht)
- 7b: Unterseite (Trägerschicht)
- 8: abriebfestes Material
- 9: Bindemittel
- 9a: Melaminharzschicht
- 9b: Melaminharzschicht
- 10: Dekorträgerschicht
- 10a: Oberseite (Dekorträgeschicht)
- 12: Bindemittel
- 12a: Melaminharzschicht
- 12b: Melaminharzschicht
- 13: Zugschicht
- 14: Bindemittelschicht
- 14a: Melaminharzschicht
- 14b: Melaminharzschicht
- D1: Gesamtdicke
- D2: Gesamtdicke
- D3: Gesamtdicke

## Patentansprüche

1. Verfahren zur Herstellung von widerstandsfähigen Belagelementen für Gebäudeoberflächen oder dergleichen, insbesondere zur Herstellung von dekorativen Belagelementen für Fußböden, unter Verwendung mehrerer Schichten, die durch die Einwirkung von Druck und Wärme in Sandwichbauweise miteinander verbunden werden, mit einer auf der dekorativen Seite vorgesehenen oberen, transparenten Decklage (2), einer Dekorschicht (4), einer Tragplatte (5) und einer unteren Decklage (6), wobei die obere Decklage (2) aus einer Trägerschicht (7) vorgefertigt wird, in die ein abriebfestes Material (8) eingebettet und die mit einem Bindemittel (9) versehen wird, **dadurch gekennzeichnet, daß** die Dekorschicht (4) auf die Tragplatte (5) oder in dem Bereich der Unterseite der oberen Decklage (2) aufgebracht wird und mit der Tragplatte (5) oder der oberen Decklage (2) zu einer vorgefertigten Schicht verarbeitet wird.

2. Verfahren nach Anspruch 1, **dadurch gekennzeichnet, daß** die Dekorschicht (4) durch eine Beschichtung mit Farbe hergestellt wird.

3. Verfahren nach Anspruch 1 oder 2, **dadurch gekennzeichnet, daß** die Dekorschicht (4) an der Unterseite (7b) der Trägerschicht (7) der Decklage (2) aufgebracht wird.

4. Verfahren nach Anspruch 1 oder 2, **dadurch gekennzeichnet, daß** an der Unterseite (7b) der Trägerschicht (7) der oberen Decklage (2) eine Bindemittelschicht (9) und darauf die Dekorschicht (4) aufgebracht wird.

5. Verfahren nach Anspruch 1 oder 2, **dadurch gekennzeichnet, daß** die Dekorschicht (4) an der Oberseite (5a) der Tragplatte (5) aufgebracht wird.

6. Verfahren nach einem der Ansprüche 2 bis 5, **dadurch gekennzeichnet, daß** die Farbe der Dekorschicht (4) aufgedruckt wird.

7. Belagelement zur Herstellung widerstandsfähiger Gebäudeoberflächen oder dergleichen, insbesondere zur Herstellung von Fußböden mit einer dekorativen Sichtseite, nach einem der vorhergehenden Ansprüche, zumindest bestehend aus einer Tragplatte (5), einer auf der Sichtseite vorgesehenen oberen transparenten Decklage (2) aus einer Trägerschicht (7) mit einem darin eingebetteten abriebfesten Material (8) sowie einer zumindest die Sichtseite (S) der Trägerschicht (7) bedeckenden Bindemittelschicht (9), einer Dekorschicht (4), die durch die obere Decklage (2) hindurch sichtbar ist sowie einer unteren Decklage (6) mit einer Zugschicht (13), die an der der Gebäudeoberfläche zugekehrten Unterseite (5b) der Tragplatte (5) vorgesehen ist, **dadurch gekennzeichnet, daß** zwischen der Trägerschicht (7) der oberen Decklage (2) und der Tragplatte (5) einzig die Dekorschicht (4) und eine Bindemittelschicht (9) angeordnet sind, und daß die Schichtdicke der Zugschicht (13) im wesentlichen der Schichtdicke der Trägerschicht (7) entspricht.

8. Belagelement nach Anspruch 7, **dadurch gekennzeichnet, daß** die Dekorschicht (4) aus Farbe besteht.

9. Belagelement nach Anspruch 7 oder 8, **dadurch gekennzeichnet, daß** die Dekorschicht (4) an der Unterseite (7b) der Trägerschicht (7) der oberen Decklage (2) angeordnet ist.

10. Belagelement nach Anspruch 7 oder 8, **dadurch gekennzeichnet, daß** an der Unterseite (7b) der Trägerschicht (7) der oberen Decklage (2) eine Bindemittelschicht (9) und darauf die Dekorschicht (4) angeordnet ist.

11. Belagelement nach Anspruch 7 oder 8, **dadurch gekennzeichnet, daß** die Dekorschicht (4) an der Oberseite (5a) der Tragplatte (5) angeordnet ist.

12. Belagelement nach einem der Ansprüche 8 bis 10a, **dadurch gekennzeichnet, daß** die Farbe der Dekorschicht (4) aufgedruckt ist.

## Claims

1. Method for the production of resistant covering elements for building surfaces or the like, especially for the production of decorative floor covering elements, consisting of several layers which are assembled in a sandwich-type construction by applying pressure and heat, with an upper transparent face sheet (2) on the decorative side, a decorative layer (4), a support plate (5) and a lower face sheet (6), where the upper face sheet (2) is prefabricated from a support layer (7), in which an abrasion-resistant material (8) is embedded and which is provided with a bonding material (9), **characterised in that** the decorative layer (4) is applied to the support plate (5), or in the area of the bottom of the upper face sheet (2), and is processed together with the support plate (5) or the upper face sheet (2) to form a prefabricated layer.

2. Method as per Claim 1, **characterised in that** the decorative layer (4) is manufactured by coating with ink.

3. Method as per Claim 1 or 2, **characterised in that** the decorative layer (4) is applied to the bottom (7b) of the support layer (7) of the face sheet (2).

4. Method as per Claim 1 or 2, **characterised in that** a bonding material layer (9) is applied to the bottom (7b) of the support layer (7) of the face sheet (2), followed by the decorative layer (4).

5. Method as per Claim 1 or 2, **characterised in that** the decorative layer (4) is applied to the top (5a) of the support plate (5).

6. Method as per one of Claims 2 to 5, **characterised in that** the ink for the decorative layer (4) is applied by a printing process.

7. Covering element for the production of resistant building surfaces of the like, especially for the production of floor coverings with a decorative visible side, as per one of the previous Claims, at least consisting of a support plate (5), an upper transparent face sheet (2), provided on the visible side and consisting of a support layer (7) with an abrasion-resistant material (8) embedded in it, and a bonding material layer (9) covering at least the visible side (S) of the support layer (7), a decorative layer (4), which is visible through the upper face sheet (2), and a lower face sheet (6) with a tension layer (13) provided on the bottom (5b) of the support plate (5) facing the building surface, **characterised in that** only the decorative layer (4) and a bonding material layer (9) are located between the support layer (7) of the upper face sheet (2) and the support plate (5), and **in that** the thickness of the tension layer (13) is essentially equal to the thickness of the support layer (7).

8. Covering element as per Claim 7, **characterised in that** the decorative layer (4) consists of ink.

9. Covering element as per Claim 7 or 8, **characterised in that** the decorative layer (4) is applied to the bottom (7b) of the support layer (7) of the upper face sheet (2).

10. Covering element as per Claim 7 or 8, **characterised in that** a bonding material layer (9) is located on the bottom (7b) of the support layer (7) of the upper face sheet (2), followed by the decorative layer (4).

11. Covering element as per Claim 7 or 8, **characterised in that** the decorative layer (4) is located on the top (5a) of the support plate (5).

12. Covering element as per one of Claims 8 to 10, **characterised in that** the ink for the decorative layer (4) is applied by a printing process.

## Revendications

1. Procédé de fabrication d'éléments de revêtement résistants pour des surfaces de bâtiments ou similaires, en particulier pour la fabrication d'éléments de revêtement décoratifs pour planchers, par l'utilisation de plusieurs couches, qui sont assemblées les unes aux autres sous l'effet de la pression et de la chaleur selon un mode de construction en sandwich, comprenant une couche de protection supérieure (2) transparente prévue sur la face décorative, une couche de décor (4), un panneau de support (5) et une couche de protection inférieure (6), la couche de protection supérieure (2) étant préfabriquée à partir d'une couche de support (7), dans laquelle est enrobé un matériau (8) résistant à l'abrasion et qui est munie d'un liant (9), **caractérisé en ce que** la couche de décor (4) est appliquée sur le panneau de support (5) ou dans la zone de la face inférieure de la couche de protection supérieure (2) et est assemblée avec le panneau de support (5) ou la couche de protection supérieure (2) pour former une couche préfabriquée.

2. Procédé selon la revendication 1, **caractérisé en ce que** la couche de décor (4) est formée par un revêtement de couleur.

3. Procédé selon la revendication 1 ou 2, **caractérisé en ce que** la couche de décor (4) est appliquée contre la face inférieure (7b) de la couche de support (7) de la couche de protection (2).

4. Procédé selon la revendication 1 ou 2, **caractérisé en ce que** sur la face inférieure (7b) de la couche de support (7) de la couche de protection supérieure (2) est appliquée une couche de liant (9) et la couche de décor (4) est appliquée contre celle-ci.

5. Procédé selon la revendication 1 ou 2, **caractérisé en ce que** la couche de décor (4) est appliquée sur la face supérieure (5a) du panneau de support (5).

6. Procédé selon l'une quelconque des revendications 2 à 5, **caractérisé en ce que** la couleur de la couche de décor (4) est imprimée sur celle-ci.

7. Élément de revêtement destiné à la réalisation de surfaces de bâtiments résistantes ou similaires, en particulier destiné à la réalisation de planchers avec une face visible décorative, selon l'une quelconque des revendications précédentes, formée au moins par un panneau de support (5), une couche de protection supérieure (2) transparente, prévue sur la face visible et formée par une couche de support (7) avec un matériau (8) résistant à l'usure enrobé dans cette dernière, ainsi que par au moins une couche de liant (9) recouvrant la face visible (S) de la couche de support (7), une couche de décor (4), qui est visible à travers la couche de protection supérieure (2), ainsi que par une couche de protection inférieure (6) avec une couche de traction (13), qui est prévue sur la face inférieure (5b), orientée vers la surface du bâtiment, du panneau de support (5), **caractérisé en ce que** seules la couche de décor (4) et une couche de liant (9) sont agencées entre la couche de support (7) de la couche de protection supérieure (2) et le panneau de support (5), et **en ce que** l'épaisseur de la couche de traction (13) correspond sensiblement à l'épaisseur de la couche de support (7).

8. Élément de revêtement selon la revendication 7, **caractérisé en ce que** la couche de décor (4) est formée par une couleur.

9. Élément de revêtement selon la revendication 7 ou 8, **caractérisé en ce que** la couche de décor (4) est agencée sur la face inférieure (7b) de la couche de support (7) de la couche de protection supérieure (2).

10. Élément de revêtement selon la revendication 7 ou 8, **caractérisé en ce que**, sur la face inférieure (7b) de la couche de support (7) de la couche de protection supérieure (2), est agencée une couche de liant (9) et sur celle-ci est agencée la couche de décor (4).

11. Élément de revêtement selon la revendication 7 ou 8, **caractérisé en ce que** la couche de décor (4) est agencée sur la face supérieure (5a) du panneau de support (5).

12. Élément de revêtement selon l'une quelconque des revendications 8 à 10, **caractérisé en ce que** la couleur de la couche de décor (4) est imprimée sur celle-ci.
